# EUROPEAN PATENT SPECIFICATION

(11) **EP 4 394 389 B1**
(45) Date of publication and mention of the grant of the patent: **09.07.2025**
(21) Application number: 22217185.2
(22) Date of filing: 29.12.2022
(51) Int. Cl.: G01N 35/10, G01N 35/04, G01N 35/00, B25J 9/10, B25J 9/16

(54) **METHOD FOR ACCURATELY POSITIONING A ROBOTIC ARM AT A TARGET POSITION IN AN AUTOMATED SAMPLE HANDLING DEVICE AND SUCH A DEVICE**
VERFAHREN ZUR GENAUEN POSITIONIERUNG EINES ROBOTERARMS AN EINER ZIELPOSITION IN EINER AUTOMATISIERTEN PROBENHANDHABUNGSVORRICHTUNG UND SOLCH EINE VORRICHTUNG
PROCÉDÉ DE POSITIONNEMENT PRÉCIS D'UN BRAS ROBOTIQUE SUR UNE POSITION CIBLE DANS UN DISPOSITIF DE MANIPULATION D'ÉCHANTILLON AUTOMATISÉ ET UN TEL DISPOSITIF

(43) Date of publication of application: 03.07.2024
(73) Proprietor: TECAN Trading AG, 8708 Männedorf (CH)
(72) Inventor: VILAJ, VOLFGANG, 8707 Uetikon am See (CH); FREI, LUCA, 8640 Rapperswil (CH); STRASSEN, SIMON, 8708 Männedorf (CH); OTT, PHILIPP, 8496 Steg (CH)
(74) Representative: Troesch Scheidegger Werner AG

(56) References cited:
- WO-A1-2018/015545
- WO-A1-2022/040598

## Description

### TECHNICAL FIELD

The present invention is related to the technical field of automated sample handling/processing systems and in particular pertains to methods for accurately positioning a robotic arm/manipulator or a part attached thereto, e.g., a pipette tip or a nozzle, in particular an opening thereof, or a gripper, in particular a finger/pin thereof, at a desired target location as well as sample handling devices capable to performing such methods.

### BACKGROUND OF THE INVENTION

When large quantities of samples must be examined in medical, chemical, analytical or pharmaceutical laboratories, automated laboratory systems are typically used today to enable rapid and reliable processing of each individual sample. Usually, one or more robotic manipulators/arms, such as a sample handling arm, are employed for the fully automatic operation of such laboratory systems. These robotic arms are specialized to deal with sample containers, such as sample tubes, microplates or microfluidic chips, in which the samples are located. Such sample processing systems comprise in particular pipettors both for aspirating and dispensing liquids or dispensers for dispensing liquids.

In view of the often very small dimensions of the sample containers, in particular of the tiny cavities (so-called "wells") in microplates having a large number, e.g., 96, 384 or 1536, cavities/wells, particularly accurate positioning by the robot arm, for example, of the pipette tip or nozzle, is necessary. Mechanical tolerances limit the accuracy with which the robot arm, e.g., the pipette tip or nozzle or gripper arranged thereon, can be positioned. It is therefore often necessary upon start-up of the robot arm to move it to a specific reference position within the sample handling system for the purpose of position calibration. This can be carried out manually, for example, by the robot arm being guided by a person to a specific point. Alternatively, it is possible to determine the reference position automatically, by the robot registering based on end switches or force measurements that it touches, for example, an end stop at the reference position.

Patent application WO2018/015545 discloses a prior art method for determining the position of a robotic arm in a liquid handling system.

Problems that arise regarding the precise positioning of the robot arm or a part attached thereto, e.g., a pipette tip or a nozzle or a gripper or finger(s) of the gripper, is that because of movement tolerances, it may be necessary to perform a position calibration periodically during the operation of the sample handling system.

Moreover, when disposable tips are employed, the used tip is periodically removed from the pipette tube and replaced with a new one, whereby due to manufacturing tolerances as well as mounting tolerances the position of the opening of the new pipette tip or nozzle will likely deviate from that of the previously attached tip. Likewise, when different exchangeable grippers are employed, e.g., for different purposes, the exact position of a finger of a newly mounted gripper is not exactly known, e.g., due to mounting tolerances.

Therefore, there exists a need in automatic sample handling systems for means which enable a simple and therefore cost-effective as well as reliable and accurate position determination or calibration. Such means should also enable the position to be set or calibrated precisely (periodically) during the operation of the sample handling system.

### SUMMARY OF THE INVENTION

It is an object of the present invention to provide a method for accurately positioning a robotic manipulator or a part attached thereto, e.g., a pipette tip, in particular a disposable tip, or a nozzle or a gripper, at a target position of a target object in an automated sample handling device. This object is achieved according to the present invention by the method defined in claim 1.

It is a further object of the present invention to specify uses of the proposed method for accurate positioning. This object is achieved according to the invention by the uses given in claim 16.

Furthermore, it is an object of the present invention to provide an automated sample handling device, which is capable of accurately positioning a robotic manipulator or a part attached thereto at a target position of a target object. This object is achieved according to the invention by the automated sample handling device defined in claim 17.

Specific embodiment variants according to the invention are specified in the dependent claims.

Note that in the following features in paratheses are to be regarded as exemplary/optional.

According to a first aspect of the present invention, the following method for accurately positioning a robotic manipulator or a part attached thereto, e.g., a pipette tip, in particular a disposable tip, or a nozzle (for aspirating, dispensing or extracting samples) or a gripper, at a target position of a target object in an automated sample handling device is proposed, comprising the steps of:
- providing a worksurface, e.g., a worktable, for placement of at least one container and/or container carrier, wherein the worksurface extends in a horizontal x and a horizontal y direction;
- providing a robotic manipulator, such as a sample handling arm, in particular to which the part is attached, wherein the robotic manipulator is moveable in the x direction, the y direction and a vertical z direction, and wherein at least a part of the robotic manipulator or of the part attached thereto forms a first electrode of a measuring capacitor and thus acts as a measuring probe;
- providing an optical, first reference object or mark (centred) at a (known) first position at or on the worksurface or container carrier, wherein the first reference object is detectable by means of imaging;
- providing a capacitive, second reference object (centred) at a (known) second position at or on the worksurface or container carrier, wherein the second reference object forms a second electrode of the measuring capacitor, and wherein a position of the robotic manipulator or of the part attached thereto relative to the second position is detectable by means of electrical impedance measurements, in particular electrical capacitance measurements, more particularly absolute capacitance measurements;
- placing a container, such as a microplate or a microfluidic chip, or a sample carrier, such as a Petri dish or a substrate, in particular a glass slide, containing or bearing or intended to receive one or more samples, on the worksurface or container carrier, wherein the container or sample carrier features the target object;
- capturing at least one image with an imaging device, such as a camera, wherein the at least one image comprises the first reference object and the target object, and wherein the imaging device in particular is mounted on the robotic manipulator;
- detecting an imaged first position of the first reference object and an imaged target position of the target object based on the at least one image;
- determining a target position based on the first position, the imaged first position and the imaged target position, in particular by taking into account an imaging function of the imaging device, in particular optical properties of one or more lenses of the imaging device, more particularly by rectifying or dewarping optical distortion of the imaging device;
- moving the robotic manipulator or the part attached thereto, i.e., the measuring probe, to different locations of the second reference object in a vicinity of the second position and performing an electrical impedance measurement of the measuring capacitor, in particular an electrical capacitance measurement, more particularly an absolute capacitance measurement, at the different locations of the second reference object;
- determining a current position of the robotic manipulator or the part attached thereto based on the electrical impedance measurements, in particular electrical capacitance measurements, more particularly absolute capacitance measurements taken at the different locations of the second reference object;
- moving the robotic manipulator or the part attached thereto from the current position to the target position.

The container carrier, such as a tablet or tray, is adapted to receive/accommodate one or more sample containers or sample carriers such as sample tubes, sample tube racks, microplates, microfluidic chips, glass slides, Petri dishes, etc. A container carrier may be placed on the worksurface or worktable and may themself form a worksurface. A container carrier may be mounted on a motorised transport unit so that it can be moved on the worksurface or worktable. Moreover, reference objects may be located at positions on the container carrier.

In an embodiment of the method the part attached to the robotic manipulator is at least one of:
- a pipette with a pipette tip, in particular a disposable tip, or a nozzle, wherein in particular an opening of the pipette tip or nozzle is to be positioned accurately;
- a gripper, in particular with a finger or pin, wherein in particular an end of gripper, more particularly of the finger or pin, is to be positioned accurately.

In a further embodiment the method further comprises aspirating, dispensing or extracting a sample or material to or from the container or carrier through the opening of the pipette tip, in particular the disposable tip, or of the nozzle.

In a further embodiment of the method the second reference object has at least one edge, at which, during a movement of the measuring probe, e.g., of the pipette tip or of the nozzle, the impedance, in particular the capacitance, of the measuring capacitor changes, and at which in particular a change of a conductivity or dielectric constant takes place.

In a further embodiment of the method the second reference object comprises at least one material transition, which, during movement of the measuring probe, e.g., of the pipette tip or of the nozzle, causes a change of the impedance, in particular the capacitance, of the measuring capacitor, and at which in particular a change of a conductivity or dielectric constant takes place.

In a further embodiment of the method the second reference object has at least one recess, depression cut-out or opening, such as a hole, through-hole, slot, or groove, which, during movement of the measuring probe, e.g., of the pipette tip or of the nozzle, causes a change of the impedance, in particular of the capacitance, of the measuring capacitor.

In a further embodiment of the method the recess, depression, cut-out or opening is triangular or trapezoidal, and wherein the second reference object in particular has two identical triangular or trapezoidal recesses, depressions, cut-outs or openings, which are arranged in particular rotated by 180° in relation to one another, and wherein the measuring probe, e.g., the pipette tip or the nozzle, traverses both recesses, depressions, cut-outs or openings during the measurements.

In a further embodiment of the method the second reference object comprises two slots (crossing/)intersecting each other, in particular two perpendicular slots, in particular (crossing/)intersecting each other in their respective midpoint.

In a further embodiment of the method the first (and/or third and/or fourth; cf. below) reference object has a distinct shape and/or structure and/or colour, wherein the distinct shape or structure in particular has a (centre) point located at the first position, and wherein the distinct colour in particular stands out from or is in (strong) contrast to the worksurface or container carrier, in particular allowing identification(/extraction) of the first (and/or third and/or fourth; cf. below) reference object from the at least one image by means of colour filtering.

In a further embodiment of the method the first (and/or third and/or fourth; cf. below) reference object comprises a luminescent material, in particular to achieve a fluorescent or phosphorescent effect (when stimulated with corresponding light).

In a further embodiment of the method a light source, in particular an ultraviolet (UV) or (mid-)infrared (IR/MIR) light source, is employed for illuminating the first (and/or third and/or fourth; cf. below) reference object.

In a further embodiment of the method the first reference object comprises crosshairs and in particular a circle centred at an intersection of the crosshairs, the intersection in particular being located at the first position.

In a further embodiment of the method the first and second reference objects are co-located, in particular wherein the second position is the same as the first position, more particularly wherein the crosshairs are centred between the pairs of triangles.

In a further embodiment of the method an optically visible shape or structure of the second reference object acts as the first reference object.

In a further embodiment of the method a third and optionally a fourth reference object or mark (centred) at a (known) third position and fourth position, respectively, are provided at or on the worksurface or container carrier, wherein the third and fourth reference object is detectable by means of imaging.

In a further embodiment of the method the first and third and optionally the fourth reference objects or marks are used to calculate a conversion factor from pixels on the at least one image to millimetres on the worktable, and in particular to calculate a rotation angle of the imaging device relative to the x (or y) direction, and in particular also to rectify or dewarp optical distortion of the imaging device.

In a further embodiment of the method the first, third and fourth reference objects are level with the target object, in particular a vertical z position of the reference objects and the target object is the same, in particular the first, third and fourth reference objects and the target object are in the (same) focal plane of the imaging device.

In this way an angular error is minimised. Furthermore, this allows to use fixed focus lenses and to simplify the vector calculations from 3D space to 2D worktable coordinates. The position determination/correction is then valid for the defined z-level/plane.

In a further embodiment of the method as part of detecting the imaged first position of the first reference object a cross-correlation, in particular a normalised cross-correlation, is performed using a template corresponding to the first reference object.

According to a second aspect of the present invention, the following uses of the method proposed above are specified:
- loading microfluidic chips using a pipette tip or a nozzle;
- integrating targets such as biological samples, e.g., tissue sections, with non-teachable positions in a sample or liquid handling platform for automating integrated workflows, e.g., preparation of samples for subsequent protein analysis by means of matrix-assisted laser-desorption-ionisation time-of-flight mass spectrometry (MALDI-TOF MS);
- positioning a nozzle precisely in an area of interest on a tissue slice or a bacteria culture, in particular for so-called colony picking of bacteria cultures or nucleic acid extraction from tissue slices;
- positioning a nozzle precisely when 3D printing a structure by dispensing 3D printing material with the nozzle, for instance for tissue extraction in an area of interest, in particular by 3D printing, e.g., with paraffin, a boundary around the area of interest to be extracted;
- positioning a gripper of a robotic manipulator, in particular one or more fingers of the gripper, precisely at a piece of labware, e.g., a sample container, so that the gripper can accurately take hold of the piece of labware.

In the last proposed use employing 3D printing, for instance a lysis buffer is filled into the area of interest confined by the previously 3D printed boundary, and after lysis aspirating the lysate with a pipette tip.

According to a third aspect of the present invention, the following automated sample handling device capable of accurately positioning a robotic manipulator or a part attached thereto, e.g., a pipette tip, in particular a disposable tip, or a nozzle (for aspirating, dispensing or extracting samples) or a gripper, at a target position of a target object is proposed, comprising:
- a worksurface, e.g., a worktable, for placement of at least one container, such as a microplate or a microfluidic chip, or sample carrier, such as a Petri dish or a substrate (in particular a glass slide), adapted to contain, bear or receive one or more samples, and/or of at least one container carrier, wherein the worksurface extends in a horizontal x and a horizontal y direction, and wherein the container or sample features the target object;
- a robotic manipulator, such as a sample handling arm, in particular to which the part, e.g., the pipette tip or the nozzle or the gripper, is attached, wherein the robotic manipulator is moveable in the x direction, the y direction and a vertical z direction, and wherein at least a part of the robotic manipulator or of the part attached thereto, e.g., of the pipette tip or of the nozzle of the gripper, forms a first electrode of a measuring capacitor and thus adapted to act as a measuring probe;
- an optical, first reference object or mark (centred) at a (known) first position at or on the worksurface or container carrier, wherein the first reference object is detectable by means of imaging;
- a capacitive, second reference object (centred) at a (known) second position at or on the worksurface or container carrier, wherein the second reference object forms a second electrode of the measuring capacitor, and wherein a position of the robotic manipulator or of the part attached thereto, e.g., of the pipette tip or of the nozzle or of the gripper, relative to the second position is detectable by means of electrical impedance measurements, in particular electrical capacitance measurements, more particularly absolute capacitance measurements;
- an imaging device, such as a camera, adapted to capture at least one image comprising the first reference object and the target object and thus acquire an imaged first position and an imaged target position, wherein the imaging device is in particular mounted on the robotic manipulator;
- a measuring unit, to which the measuring probe and the second reference object are operationally connected, adapted to measure an impedance, in particular a capacitance, more particularly an absolute capacitance of the measuring capacitor;
- a control unit adapted to:
   - determine a target position based on the first position, the imaged first position and the imaged target position, in particular by taking into account an imaging function of the imaging device, in particular optical properties of one or more lenses of the imaging device, more particularly by rectifying or dewarping optical distortion of the imaging device;
   - actuate the robotic manipulator such that the measuring probe is moved to different locations of the second reference object in a vicinity of the second position;
   - trigger the measuring unit to perform electrical impedance measurements, in particular electrical capacitance measurements, more particularly absolute capacitance measurements, at the different locations of the second reference object;
   - determine a current position of the measuring probe based on the electrical impedance measurements, in particular electrical capacitance measurements, more particularly absolute capacitance measurements taken at the different locations of the second reference object;
   - move the robotic manipulator or the part attached thereto, e.g., the pipette tip or the nozzle or the gripper, from the current position to the target position.

In an embodiment of the device the part attached to the robotic manipulator is at least one of:
- a pipette with a pipette tip, in particular a disposable tip, or a nozzle, wherein in particular an opening of the pipette tip or nozzle is to be positioned accurately;
- a gripper, in particular with a finger or pin, wherein in particular an end of gripper, more particularly of the finger or pin, is to be positioned accurately.

In a further embodiment the device the control unit is further adapted to actuate the pipette tip or nozzle to aspirate, dispense or extract a sample or material to or from the container or carrier through the opening of the pipette tip, in particular the disposable tip, or of the nozzle.

In a further embodiment of the device the second reference object has at least one edge, at which, during a movement of the measuring probe, e.g., of the pipette tip or of the nozzle or of the gripper, the impedance, in particular the capacitance, of the measuring capacitor changes, and at which in particular a change of a conductivity or dielectric constant takes place.

In a further embodiment of the device the second reference object comprises at least one material transition, which, during movement of the measuring probe, e.g., of the pipette tip or of the nozzle or of the gripper, causes a change of the impedance, in particular the capacitance, of the measuring capacitor, and at which in particular a change of a conductivity or dielectric constant takes place.

In a further embodiment of the device the second reference object has at least one recess, depression cut-out or opening, such as a hole, through-hole, slot, or groove, which, during movement of the measuring probe, e.g., of the pipette tip or of the nozzle or of the gripper, causes a change of the impedance, in particular of the capacitance, of the measuring capacitor.

In a further embodiment of the device the recess, depression, cut-out or opening is triangular or trapezoidal, and wherein the second reference object in particular has two identical triangular or trapezoidal recesses, depressions, cut-outs or openings, which are arranged in particular rotated by 180° in relation to one another, and wherein the measuring probe, e.g., the pipette tip or the nozzle or the gripper, traverses both recesses, depressions, cut-outs or openings during the measurements.

In a further embodiment of the device the second reference object comprises two slots (crossing/)intersecting each other, in particular two perpendicular slots, in particular (crossing/)intersecting each other in their respective midpoint.

In a further embodiment of the device the first reference object has a distinct shape and/or structure and/or colour, wherein the distinct shape or structure in particular has a (centre) point located at the first position, and wherein the distinct colour in particular stands out from or is in (strong) contrast to the worksurface or container carrier, in particular allowing identification(/extraction) of the first reference object from the at least one image by means of colour filtering.

In a further embodiment of the device the first (and/or third and/or fourth; cf. below) reference object comprises a luminescent material, in particular to achieve a fluorescent or phosphorescent effect (when stimulated with corresponding light).

In a further embodiment of the device a light source, in particular an ultraviolet (UV) or (mid-)infrared (IR/MIR) light source, is employed for illuminating the first (and/or third and/or fourth; cf. below) reference object.

In a further embodiment of the device the first reference object comprises crosshairs and in particular a circle centred at an intersection of the crosshairs, the intersection in particular being located at the first position.

In a further embodiment of the device the first and second reference objects are co-located, in particular wherein the second position is the same as the first position, more particularly wherein the crosshairs are centred between the pairs of triangles.

In a further embodiment of the device an optically visible shape or structure of the second reference object acts as the first reference object.

In a further embodiment of the device a third and optionally a fourth reference object or mark (centred) at a (known) third position and fourth position, respectively, are provided at or on the worksurface or container carrier, wherein the third and fourth reference object is detectable by means of imaging.

In a further embodiment of the device the first and third and optionally the fourth reference objects or marks are used to calculate a conversion factor from pixels on the at least one image to millimetres on the worktable, and in particular to calculate a rotation angle of the imaging device relative to the x direction, and in particular also to rectify or dewarp optical distortion of the imaging device.

In a further embodiment of the device the first, third and fourth reference objects are level with the target object, in particular a vertical z position of the reference objects and the target object is the same, in particular the first, third and fourth reference objects and the target object are in the (same) focal plane of the imaging device.

In this way an angular error is minimised. Furthermore, this allows to use fixed focus lenses and to simplify the vector calculations from 3D space to 2D worktable coordinates. The position determination/correction is then valid for the defined z-level/plane.

In a further embodiment the device comprises image processing means adapted to perform a cross-correlation, in particular a normalised cross-correlation, using a template corresponding to the first reference object as part of detecting the imaged first position of the first reference object.

It is specifically pointed out that combinations of the embodiments mentioned above can result in even further, more specific embodiments.

It is also to be noted that certain features/elements of the embodiments mentioned above can be considered as stand-alone inventions, such as the gating means, which can for instance be employed independently in other possible apparatuses for conveying and buffering or even for other purposes requiring a gating function.

### BRIEF DESCRIPTION OF THE DRAWINGS

The present invention is further explained below by means of non-limiting specific embodiments and with reference to the accompanying drawings, which show the following:
- Fig. 1: a top view of a worktable of a sample handling system/device having a robot arm, wherein different pieces of labware (containers & carriers) are placed on the worktable;
- Fig. 2: a typical workflow according to the proposed method for accurately positioning an opening of a pipette tip or nozzle;
- Fig. 3: a) a cross-section of a worktable having a capacitive reference object in the form of a recess, b) idealised capacitance curve of the measuring capacitor as a function of the x coordinate of a measuring probe (pipette tip) for the capacitive reference object of Fig. 3 a);
- Fig. 4: a top view of a worktable having a capacitive reference object in the form of two triangular recesses arranged next to each other;
- Fig. 5: a) a perspective view of a worktable having a capacitive reference object in the form of two triangular recesses arranged next to each other together with a measuring probe (pipette tip), b) measured capacitance of the measuring capacitor along the path of the measuring probe for the capacitive reference object of Fig. 5 a);
- Fig. 6: an exemplary plot of a 2D cross-correlation for determining the location of three optical reference objects; and
- Fig. 7: a perspective view of a robot arm with a gripper, whereby the two fingers of the gripper are to be precisely positioned to carefully take hold of a sample tube arranged in a carrier.

In the figures, like reference signs refer to like parts/ elements.

### DETAILED DESCRIPTION OF THE INVENTION

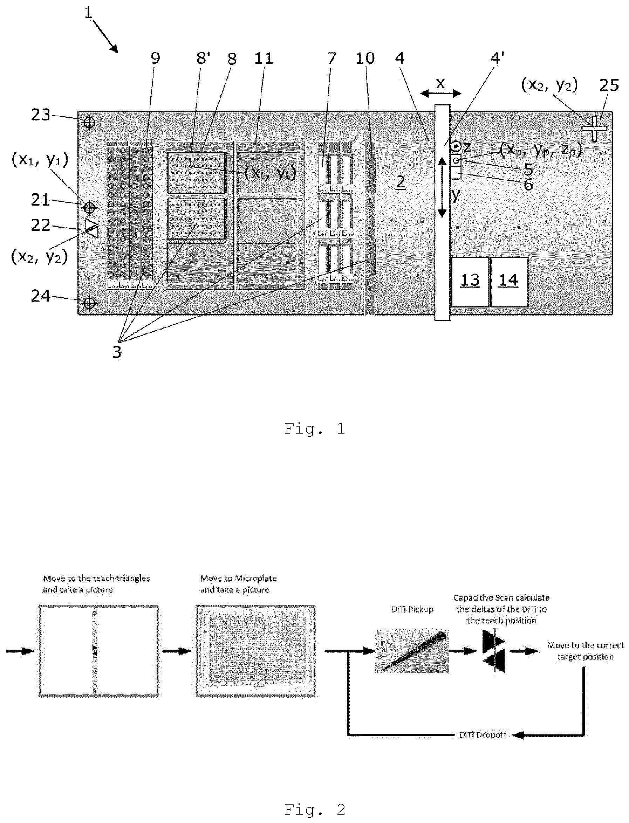

Fig. 1 shows a top view of a worktable 2 or worksurface of an exemplary automatic sample handling system/device 1 with a pipetting robot (arm) 4. Movements of the pipetting robot (arm) 4 are driven by motors. The pipetting robot (arm) 4 comprises a beam 4' moveable along the x direction of the worktable 2, the beam 4' being located at a fixed height above and spanning across the worktable 2 in the y direction (perpendicular to the x direction). A vertical z rod is attached to the beam 4', the z rod being movable along the beam 4' and therewith across the worktable 2 in the y direction. A pipette 5 with a (disposable) pipette tip 5' for aspirating and/or dispensing liquid samples (or an extractor/dispenser with a nozzle for extracting and/or depositing sample material) is mounted to the z rod. The pipette 5 can be moved up and down the z rod in the z direction (perpendicular to the x/y plane) so that the pipette 5 and the pipette tip 5' can be lowered down towards or raised up from the worktable 2. The pipette 5 can be fluidically connected, e.g., via a flexible tube, with an activatable pump. A liquid (e.g., system liquid) or a gas (e.g., air) or a combination of both (e.g., a system liquid with an "air gap") may be present between the conveying element of the pump (e.g., a plunger) and the pipette 5 or rather its pipette tip by which a liquid sample can be aspirated or dispensed. A variety of different containers 3 are shown on the worktable 2, such as sample tubes 9, e.g., arranged in so-called "racks", or microplates 8, e.g., having 24, 96, 384 or 1536 cavities/wells, or glass slides 7 (or alternatively Petri dishes) or microfluidic chips 10 into which samples are to be dispensed/deposited or from which samples are to be aspirated/extracted. Furthermore, six (container) carriers (or tablets) 11 are also illustrated in Fig. 1 for carrying/holding microplates 8. Moreover, the sample handling device 1 comprises a control unit 14 with which the pipetting robot 4 (i.e., the drives and pump) is controlled. A control program executed by the control unit 14 enables the pipetting robot 4 to position the pipette 5 at a specific location on the worktable 2 and perform certain actions/functions there using the pipette tip 5'.

Before moving the pipette 5 the sample handling device 1 must know the position (xₚ, yₚ) of the pipette 5 as well as the target position (xₜ, yₜ) of the target object, e.g., a specific cavity/well 8' in the microplate 8. To determine the position (xₜ, yₜ) of the target object 8', the sample handling device 1 is equipped with a camera 6 (or any alternative imaging device, such as a LIDAR "light detection and ranging" sensor). The camera 6 is preferably attached to the beam 4', i.e., at a fixed height above the worktable 2. The camera 6 may be moveable along the beam 4', either separately or together with the z rod. Alternatively, the camera 6 may be fixedly attached to the beam 4', for instance in the middle of the beam 4' (e.g., at a centre x axis of the worktable 2). An optical, first reference object 21 or mark is provided centred at a first (reference) position (x₁, y₁) at or on the worktable 2.

The first reference object 21 is detectable by means of imaging. In the example of Fig. 1 a crosshair is used as the first reference object 21. One or more images of the worktable 2, or at least of the first reference object 21 and of the target object 8' are taken. The target position (xₜ, yₜ) can be identified manually by an operator of the sample handling device 1 on the corresponding image, but can also be detected automatically by the sample handling device 1 itself, for instance based on an appropriate optical (reference) marking (e.g., a red dot), which is possibly offset by a known distance from the actual target position, by means of image processing. Alternatively, a characteristic feature of the target object could be automatically identified again based on image processing. Once the first reference object and the target have been identified on the image(s) the actual target position (xₜ, yt) can be determined based in the location of the target object 8' in the corresponding image, i.e., the imaged target position (xₜ', yₜ'), the imaged first position (x₁', y₁') of the first reference object 21 in the corresponding image and the first position (x₁, y₁). In order to determine the actual target position (xₜ, yₜ) from the image(s) an imaging function of the camera 6 is taken into account, in particular optical properties of the lens(es) of the camera 6 are taken into account, in order to rectify or dewarp any optical distortion caused by the camera 6.

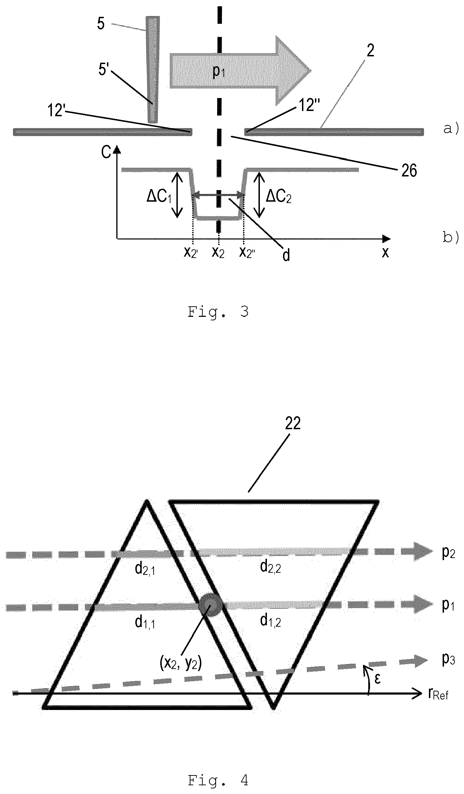

As mentioned above, the pipette 5 is attached to the z rod and a (disposable) pipette tip 5' is mounted on the pipette 5. Due to mechanical manufacturing tolerances of the pipette tip 5', mounting inaccuracies of the pipette tip 5' on the pipette as well as tolerances of the drive system, the position of the opening of the pipette tip 5' is not exactly known, especially after replacing the (disposable) pipette tip 5'. The position of the opening of the pipette tip 5' can be determined by means of electrical impedance measurements, in particular electrical capacitance measurements, more particularly absolute capacitance measurements. For this purpose, a capacitive, second reference object 22 is provided centred at a second position (x₂, y₂) at or on the worktable 2, wherein the second reference object 22 forms a second electrode of the measuring capacitor, and wherein at least a part of the pipette tip 5 (or of the nozzle) forms a first electrode of a measuring capacitor. The opening of the pipette tip 5' (or of the nozzle) is then moved to different locations of the second reference object 22 in a vicinity of the second reference position (x₂, y₂) by the pipetting robot 4 and electrical impedance measurements of the measuring capacitor, in particular electrical capacitance measurements, more particularly absolute capacitance measurements, are performed at the different locations of the second reference object 22. The current position (xₚ, yₚ) (and optionally also the vertical coordinate zₚ) of the opening of the pipette tip 5' or of the nozzle is then determined based on the electrical impedance / (absolute) capacitance measurements taken at the different locations of the second reference object 22. As can be seen in Fig. 1 two triangular recesses/holes are used as capacitive, second reference object 22. Thereby, the worktable 2 containing these two triangular recesses/holes or a separate part containing them is connected to an impedance/capacitance measuring unit 13 together with the measuring probe in the form of the pipette 5 or pipette tip 5'. The measurements will be explained in more detail in conjunction with Figs. 3-5. The first and second reference objects 21 & 22 can be collocated as shown in Fig. 1 on the left side. The second reference object 25 can however also be distant from the first reference object 21. The alternative second reference object 25 shown in Fig. 1 on the right side is formed by two slots centrally intersecting each other.

As shown in Fig. 1 on the left side, a third and fourth (optical) reference object 23 & 24 or mark centred at a third position and fourth position, respectively, are provided at or on the worktable 2. Like the first reference object 21, the further two reference objects 23 & 24 take on the form of crosshairs. They are located at the top and bottom left corners of the worktable 2, and all three crosshairs 21, 23 & 24 are arranged on a straight line in the example shown in Fig. 1. They are used to calculate a conversion factor from pixels on the image(s) to millimetres (physical units of length or actual coordinates) on the worktable 2. In particular they are used to calculate a rotation angle of the camera (e.g., an axis of the camera perpendicular to the worktable 2) relative to the x (or y) direction. This information is then employed to rectify a misorientation of the camera 6 as well as to dewarp optical distortions caused by the camera 6. Dewarping of optical distortions caused by the camera 6 can be facilitated (and improved) by using a large number of optical reference points or a grid of lines applied on the worktable 2. These can for instance also be projected onto the worktable by an appropriate light source. Three rows of optical reference points are illustrated on the worktable shown in Fig. 1.

The first, third and fourth reference objects 21, 23 & 24 are preferably level with the target object 8', i.e., all at the same vertical z position, so that the first, third and fourth reference objects 21, 23 & 24 and the target object 8' are all located within the same focal plane of the camera 6, at least approximately, so that that are all in focus at the same time. This allows to use fixed focus lenses and to simplify the vector calculations from 3D space to 2D worktable coordinates. The position determination/correction is then valid for the defined z-level/plane. In this way, also an angular error is minimised.

Fig. 2. schematically illustrates a typical, exemplary workflow according to the proposed method of the invention for accurately positioning an opening of a pipette tip or nozzle. First a picture/image is taken by the camera 6 of the optical reference objects 21, 23 & 24. Then a second image is taken of the microplate 8 with its many cavities/wells 8'. Subsequently, the target position (xₜ, yₜ) of a desired one of the cavities/wells 8', e.g., the one in the top left corner, is determined a described above taking into account the movement of the camera 6 between taking the first and second image. Subsequently, the pipetting robot 4 picks up a fresh disposable pipette tip and then performs the impedance/capacitance measurements as described above when moving the pipette tip across the capacitive, second refence object 22, i.e., the two triangles located next to each other. Details regarding the measurements will be given in more detail below in the text regarding Figs. 3-5. The pipette is then moved to the first target position, where for instance a liquid sample is aspirated. Once the aspirated sample has been dispensed, the used disposable tip is dropped off, a new disposable tip is picked up and the procedure to determine the exact position of the opening of the new disposable tip is performed. The pipette is then moved to the next target position, e.g., the second cavity/well 8' in the top row, where again a liquid sample is aspirated. This loop is repeated until liquid samples have been aspirated from all the cavities/wells 8' of the microplate 8.

Fig. 3a) shows a cross section of a worktable 2 having a recess 26 in the form of a round hole as a second reference object. The measuring probe in the form of the pipette tip 5', which forms the measuring capacitor here together with the worktable 2, is first lowered vertically (i.e., in the z direction) by the pipetting robot 4 until it is located just above the worktable 2 (e.g., at a distance of less than 1 mm). To determine this distance, the capacitance of the measuring capacitor is continuously measured using the measuring unit 13 during the movement of the pipette tip 5', until it reaches a specific value, which is characteristic for the desired distance of the pipette tip 5' from the worksurface 2. The pipette tip 5' is then moved along a horizontal path p₁ (i.e., in the x/y direction) over the worktable 2, which leads over the hole 26. By way of continuous measurement of the capacitance C of the measuring capacitor it is possible to detect the edge 12 of the hole 26, which manifests as a sudden decrease (ΔC₁) of the capacitance C, as is shown in the measured curve of the capacitance C as a function of the x position in Figure 3b). After the pipette tip 5' has traversed the hole 26, the second edge 12' of the hole 26 is indicated by a sudden increase (ΔC₂) of the capacitance C. The measuring unit 13 can thus determine the two positions x_{2'} and x_{2"}, at which the capacitance changes ΔC₁ and ΔC₂ occurred. The diameter d of the hole 26 is known, so the position x₂ of the centre of the hole 26 can be determined from x₂, and x_{2"}. The accuracy of the position x₂ can be improved by traversing the hole 26 multiple times and averaging the measurement results, which leads to noise reduction.

The hole 26 may be sealed/covered, for example, with a material which has a different dielectric constant or conductivity than the worktable 2. In order that the worktable 2 acts as an electrode, it is ideally made of metal, while in contrast the hole 26 could be sealed, for instance using an insulator, e.g., a nonconductive plastic. The described position determination method would also work in this way, since when crossing materials having different dielectric constants (or different conductivities), corresponding capacitance jumps will occur.

Instead of recesses such as holes 26, depressions such as grooves can also be used as reference position marks or rather as reference position determination identifiers. Alternatively, slots 25 aligned differently (in the x and y directions) can also be used, as is shown in Fig. 1 in the top right corner of the worktable 2.

Fig. 4 shows a further embodiment of the capacitive, second reference object 22 for position determination/calibration of the pipette tip 5'. For this purpose, two triangular recesses 22 arranged pivoted by 180° relative to one another are used on the worktable 2. Upon moving across these two recesses 22 along the path p₁ in the centre of these triangles, the two sections d_{1,1} and d_{1,2} are of equal length, meaning that the second reference point (x₂, y₂) is located precisely between these two sections d_{1,1} and d_{1,2}. However, if the path is offset from the centre, for instance like the path p₂ in Fig. 4, the two sections d_{2,1} and d_{2,2} have different lengths. Based on the shape and size of the recesses 22 and the ratio d_{2,1}/d_{2,2} of the two sections d_{2,1} and d_{2,2}, the measurement unit 13 can accurately determine the offset and thus the position of the second reference point (x₂, y₂). Moreover, the angle error ε, i.e., a directional deviation of a path (cf. path p₃ in Fig. 4) may be determined from a reference direction r_{Ref}. This angle error ε may be computed based on the geometry of the triangles 22 and the known direction of movement along a straight path.

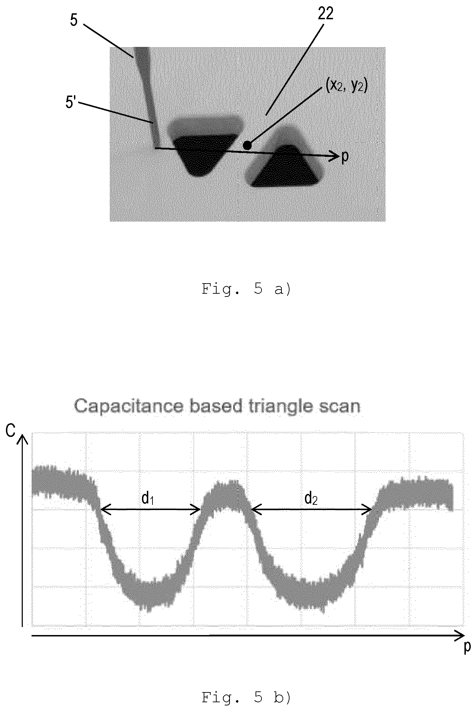

Fig. 5 a) shows a perspective view of a worktable 2 with a capacitive reference object 22 in the form of two triangular recesses arranged next to each other like in Fig. 4 together with a measuring probe in the form of the pipette tip 5'. The measured capacitance C of the measuring capacitor along the path p of the measuring probe for this capacitive reference object 22 is shown in Fig. 5 b). As can be seen from d₁<d₂ the path p is slightly off centre from the second reference position (x₂, y₂).

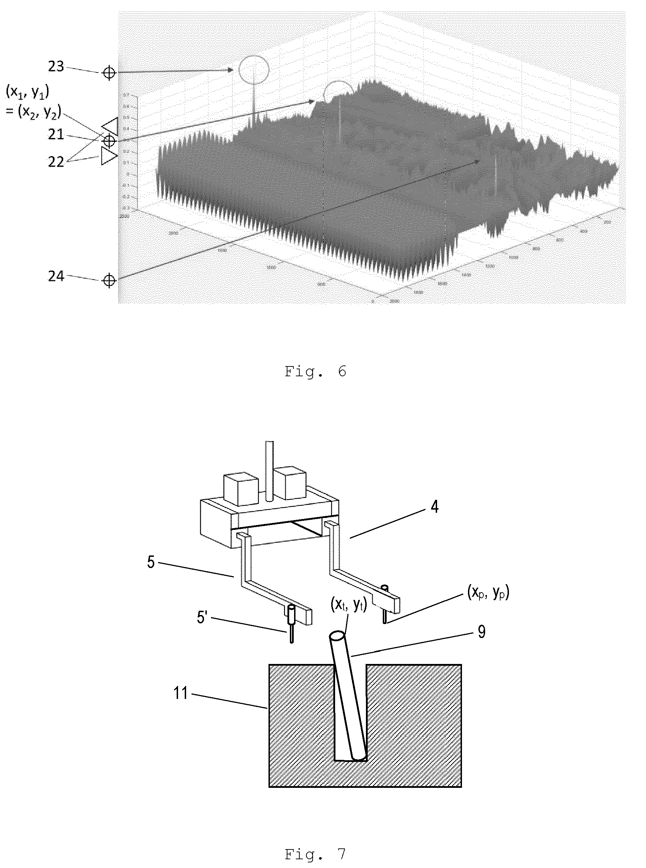

Finally, Fig. 6 shows an exemplary plot of a two-dimensional cross-correlation of an image taken with the camera with a template comprising the crosshairs of the first, third and fourth optical reference objects 21, 23 & 24 for determining their location within the image. The positions of the three crosshairs 21, 23 & 24 are clearly apparent from the three distinct peaks in the 2D cross-correlation plot shown in Fig. 6.

Fig. 7 illustrates another scenario where the method according to the present invention may be employed. Fig. 7 shows a perspective view of a robot arm 4 with a gripper 5 having two fingers, which are to be precisely positioned at opposite sides of a sample tube 9 arranged in a sample tube carrier 11, so that the gripper 5 can accurately and carefully take hold of the sample tube 9 to remove it from the recess within the sample tube carrier 11. The sample tube 9 is arranged atilt in the recess, due to the diameter of the recess being larger than that of the sample tube 9. The target position (xₜ, yₜ) is determined based on an image taken by a camera of the target object, i.e., the opening of the sample tube 9. The opening can be extracted from the image by means of feature extraction. In order to accurately position the gripper 5 at the carrier 11, the carrier 11 features both an optical, first reference object as well as a capacitive, second reference object (both not shown in Fig. 7). The first and second reference objects are preferably collocated at a position on the carrier. This position can be determined from an image of the carrier 11, whereby the image for instance includes the gripper 5 or alternatively the position of the gripper 5 relative to the camera that takes the image is known. To precisely determine the position of the fingers of the gripper 5, a pin 5' is attached to each finger of the gripper 5. These pins act measuring probes allowing to determine their exact position relative to the capacitive, second reference object by means of capacitance measurements as described in detail above.

### LIST OF REFERENCE SYMBOLS

- 1: automatic sample handling system/device
- 2: worksurface/worktable
- 3: sample container(s) (for receiving samples)
- 4: pipetting robot (arm) movable in x, y & z direction; robot arm with gripper
- 4': beam of pipetting robot (movable in x direction) to which z rod (movable in y direction) is attached to which the pipette tip / nozzle (movable in z direction) is attached
- 5: pipette with pipette tip / nozzle; gripper with finger(s)/pin(s) acting as measuring probe
- 5': (disposable) pipette tip; finger(s)/pin(s) of the gripper acting as measuring probe
- 6: camera
- 7: sample carrier, e.g., glass slide (Petri dish)
- 8: microplate
- 8': cavity/well in the microplate
- 9: sample tube in sample tube carrier/rack
- 10: microfluidic chip
- 11: sample container carrier/tablet/tray
- 12', 12": first and second edge of hole (second, capacitive reference object)
- 13: measuring unit
- 14: control unit
- 21: crosshair as optical, first reference object
- 22: triangular recesses as capacitive, second reference object
- 23: crosshair as optical, third reference object
- 24: crosshair as optical, fourth reference object
- 25: cross-slots as capacitive, second reference object
- 26: recess/hole as capacitive, second reference object
- C: capacitance of the measuring capacitor
- ΔC1, ΔC2: change of capacitance of measuring capacitor
- d, d_{i,j}: diameter/distance
- ε: angle error/directional deviation of a path from a reference direction r_{Ref}
- p₁, p₂, p₃: travel paths of measuring probe (pipette tip)
- r_{Ref}: reference direction
- (x₁, y₁): first position/coordinate of first reference
- (x₂, y₂): second position/coordinate of second reference
- (xₚ, yₚ): pipette tip / nozzle opening / pin tip position/coord., optionally also including the z coord. zₚ
- (xₜ, yₜ): target position/coordinate
- x₂,: x position/coord. of first edge of recess/hole
- x_{2"}: x position/coord. of second edge of recess/hole
- x: first horizontal direction
- y: second horizontal direction
- z: vertical direction

## Claims

1. A method for accurately positioning a robotic manipulator or a part (5) attached thereto at a target position (xₜ, yt) of a target object (8') in an automated sample handling device (1), the method comprising the steps of:
- providing a worksurface (2), e.g., a worktable, for placement of at least one container (3) and/or container carrier (11), wherein the worksurface (2) extends in a horizontal x and a horizontal y direction;
- providing a robotic manipulator, such as a sample handling arm (4), in particular to which the part (5) is attached, wherein the robotic manipulator is moveable in the x direction, the y direction and a vertical z direction, and wherein at least a part of the robotic manipulator or of the part (5) attached thereto forms a first electrode of a measuring capacitor and thus acts as a measuring probe (5, 5');
- providing an optical, first reference object (21) or mark at a first position (x₁, y₁) at or on the worksurface (2) or container carrier (11), wherein the first reference object (21) is detectable by means of imaging;
- providing a capacitive, second reference object (22, 25) at a second position (x₂, y₂) at or on the worksurface (2) or container carrier (11), wherein the second reference object (22, 25) forms a second electrode of the measuring capacitor, and wherein a position (xₚ, yₚ) of the robotic manipulator or of the part (5) attached thereto relative to the second position (x₂, y₂) is detectable by means of electrical impedance measurements, in particular electrical capacitance measurements, more particularly absolute capacitance measurements;
- placing a container (3), such as a microplate (8) or a microfluidic chip (10), or a sample carrier (7), such as a Petri dish or a substrate, on the worksurface (2) or container carrier (11), wherein the container (3) or sample carrier (7) features the target object (8');
**characterised in that** the method comprises the steps of
- capturing at least one image with an imaging device, such as a camera (6), wherein the at least one image comprises the first reference object (21) and the target object (8'), and wherein the imaging device in particular is mounted on the robotic manipulator;
- detecting an imaged first position (x₁', y₁') of the first reference object (21) and an imaged target position (xₜ', yₜ') of the target object (8') based on the at least one image;
- determining a target position (xₜ, yt) based on the first position (x₁, y₁), the imaged first position (x₁', y₁') and the imaged target position (xₜ', vₜ'), in particular by taking into account an imaging function of the imaging device, in particular optical properties of one or more lenses of the imaging device, more particularly by rectifying or dewarping optical distortion of the imaging device;
- moving the robotic manipulator or the part (5) attached thereto, i.e., the measuring probe (5, 5'), to different locations of the second reference object (22, 25) in a vicinity of the second position (x₂, y₂) and performing an electrical impedance measurement of the measuring capacitor, in particular an electrical capacitance measurement, more particularly an absolute capacitance measurement, at the different locations of the second reference object (22, 25);
- determining a current position (xₚ, yₚ) of the robotic manipulator or of the part (5) attached thereto based on the electrical impedance measurements, in particular electrical capacitance measurements, more particularly absolute capacitance measurements taken at the different locations of the second reference object (22, 25);
- moving the robotic manipulator or the part (5) attached thereto from the current position (xₚ, yₚ) to the target position (xₜ, yₜ).

2. The method of claim 1, wherein the part (5) attached to the robotic manipulator is at least one of:
- a pipette (5) with a pipette tip (5'), in particular a disposable tip, or a nozzle, wherein in particular an opening of the pipette tip (5') or nozzle is to be positioned accurately;
- a gripper (5), in particular with a finger or pin (5'), wherein in particular an end of gripper (5), more particularly of the finger or pin (5'), is to be positioned accurately.

3. The method of claim 1 or 2, wherein the second reference object (22, 25) has at least one edge, at which, during a movement of the measuring probe (5, 5'), the impedance, in particular the capacitance, of the measuring capacitor changes, and at which in particular a change of a conductivity or dielectric constant takes place.

4. The method of any one of claims 1 to 3, wherein the second reference object (22, 25) comprises at least one material transition, which, during movement of the measuring probe (5, 5'), causes a change of the impedance, in particular the capacitance, of the measuring capacitor, and at which in particular a change of a conductivity or dielectric constant takes place.

5. The method of any one of claims 1 to 4, wherein the second reference object (22, 25) has at least one recess, depression cut-out or opening, such as a hole, through-hole, slot, or groove, which, during movement of the measuring probe (5, 5'), causes a change of the impedance, in particular of the capacitance, of the measuring capacitor.

6. The method of claim 5, wherein the recess, depression, cut-out or opening is triangular or trapezoidal, and wherein the second reference object (22, 25) in particular has two identical triangular or trapezoidal recesses, depressions, cut-outs or openings, which are arranged in particular rotated by 180° in relation to one another, and wherein the measuring probe (5, 5') traverses both recesses, depressions, cut-outs or openings during the measurements.

7. The method of claim 5, wherein the second reference object (22, 25) comprises two slots intersecting each other, in particular two perpendicular slots, in particular intersecting each other in their respective midpoint.

8. The method of any one of claims 1 to 6, wherein the first reference object (22, 25) has a distinct shape and/or structure and/or colour, wherein the distinct shape or structure in particular has a point located at the first position (x₁, y₁), and wherein the distinct colour in particular stands out from or is in contrast to the worksurface (2) or container carrier (11), in particular allowing identification of the first reference object from the at least one image by means of colour filtering.

9. The method of claim 8, wherein the first reference object (22) comprises crosshairs and in particular a circle centred at an intersection of the crosshairs, the intersection in particular being located at the first position (x₁, y₁).

10. The method of any one of claims 1 to 8, wherein the first (21) and second (22, 25) reference objects are co-located, in particular wherein the second position (x₂, y₂) is the same as the first position (x₁, y₁), more particularly wherein the crosshairs are centred between the pairs of triangles.

11. The method of claim 10, wherein an optically visible shape or structure of the second reference object (22, 25) acts as the first reference object (21).

12. The method of any one of claims 1 to 11, wherein a third and optionally a fourth reference object (23, 24) or mark at a third position (x₃, y₃) and fourth position (x₄, y₄), respectively, are provided at or on the worksurface (2) or container carrier (11), wherein the third and fourth reference object (23, 24) is detectable by means of imaging.

13. The method of claim 12, wherein the first and third and optionally the fourth reference objects (21, 23, 24) or marks are used to calculate a conversion factor from pixels on the at least one image to millimetres on the worksurface (2), and in particular to calculate a rotation angle of the imaging device (6) relative to the x direction, and in particular also to rectify or dewarp optical distortion of the imaging device (6).

14. The method of any one of claims 1 to 13, wherein the first, third and fourth reference objects (21, 23, 24) are level with the target object, in particular a vertical z position of the reference objects and the target object is the same, in particular the first, third and fourth reference objects and the target object are in the focal plane of the imaging device.

15. The method of any one of claims 1 to 14, wherein as part of detecting the imaged first position (x₁', y₁') of the first reference object a cross-correlation, in particular a normalised cross-correlation, is performed using a template corresponding to the first reference object.

16. A use of the method according to any one of claims 1 to 15 for any one of:
- loading microfluidic chips using a pipette tip (5') or a nozzle;
- integrating targets such as biological samples, e.g., tissue sections, with non-teachable positions in a sample or liquid handling platform for automating integrated workflows;
- positioning a nozzle precisely in an area of interest on a tissue slice or a bacteria culture, in particular for so-called colony picking of bacteria cultures or nucleic acid extraction from tissue slices;
- positioning a nozzle precisely when 3D printing a structure by dispensing 3D printing material with the nozzle, for instance for tissue extraction in an area of interest, in particular by 3D printing, e.g., with paraffin, a boundary around the area of interest to be extracted;
- positioning a gripper (5) of a robotic manipulator, in particular one or more fingers (5') of the gripper (5), precisely at a piece of labware, e.g., a sample container (3), so that the gripper (5) can accurately take hold of the piece of labware.

17. An automated sample handling device capable of accurately positioning a robotic manipulator or a part (5) attached thereto at a target position (xₜ, yt) of a target object, the device comprising:
- a worksurface (2), e.g., a worktable, for placement of at least one container (3), such as a microplate or a microfluidic chip, or sample carrier, such as a Petri dish or a substrate, adapted to contain, bear or receive one or more samples, and/or of at least one container carrier (11), wherein the worksurface (2) extends in a horizontal x and a horizontal y direction, and wherein the container (3) or sample features the target object (8');
- a robotic manipulator, such as a sample handling arm (4), in particular to which the part (5) is attached, wherein the robotic manipulator is moveable in the x direction, the y direction and a vertical z direction, and wherein at least a part of the robotic manipulator or of the part (5) attached thereto forms a first electrode of a measuring capacitor and thus adapted to act as a measuring probe (5, 5');
- an optical, first reference object (21) or mark at a first position (x₁, y₁) at or on the worksurface (2) or container carrier (11), wherein the first reference object (21) is detectable by means of imaging;
- a capacitive, second reference object (22, 25) at a second position (x₂, y₂) at or on the worksurface (2) or container carrier (11), wherein the second reference object (22, 25) forms a second electrode of the measuring capacitor, and wherein a position of the robotic manipulator or of the part (5) attached thereto relative to the second position (x₂, y₂) is detectable by means of electrical impedance measurements, in particular electrical capacitance measurements, more particularly absolute capacitance measurements;
- an imaging device, such as a camera (6), adapted to capture at least one image comprising the first reference object (21) and the target object (8') and thus acquire an imaged first position (x₁', y₁') and an imaged target position (xₜ', yₜ'), wherein the imaging device is in particular mounted on the robotic manipulator;
- a measuring unit (13), to which the measuring probe (5, 5') and the second reference object (22, 25) are operationally connected, adapted to measure an impedance, in particular a capacitance, more particularly an absolute capacitance of the measuring capacitor;
- a control unit (14) adapted to:
- determine a target position (xt, yt) based on the first position (x₁, y₁), the imaged first position (x₁', y₁') and the imaged target position (xₜ', yₜ'), in particular by taking into account an imaging function of the imaging device, in particular optical properties of one or more lenses of the imaging device, more particularly by rectifying or dewarping optical distortion of the imaging device;
- actuate the robotic manipulator such that the measuring probe (5, 5') is moved to different locations of the second reference object (22, 25) in a vicinity of the second position (x₂, y₂);
- trigger the measuring unit (13) to perform electrical impedance measurements, in particular electrical capacitance measurements, more particularly absolute capacitance measurements, at the different locations of the second reference object (22, 25);
- determine a current position (xₒ, yₒ) of the measuring probe (5, 5') based on the electrical impedance measurements, in particular electrical capacitance measurements, more particularly absolute capacitance measurements taken at the different locations of the second reference object (22, 25);
- move the robotic manipulator or the part (5) attached thereto from the current position (xₒ, yₒ) to the target position (xₜ, yₜ).

## Patentansprüche

1. Verfahren zur genauen Positionierung eines Robotermanipulators oder eines daran befestigten Teils (5) an einer Zielposition (xₜ, yₜ) eines Zielobjekts (8') in einer automatischen Probenhandhabungsvorrichtung (1), wobei das Verfahren die folgenden Schritte umfasst:
- Bereitstellen einer Arbeitsfläche (2), z.B. eines Arbeitstisches, zum Plazieren von mindestens einem Behälter (3) und/oder Containerträger (11), wobei sich die Arbeitsfläche (2) in einer horizontalen x- und einer horizontalen y-Richtung erstreckt;
- Bereitstellen eines Robotermanipulators, wie z.B. eines Probenhandhabungsarms (4), an dem insbesondere das Teil (5) befestigt ist, wobei der Robotermanipulator in die x-Richtung, die y-Richtung und eine vertikale z-Richtung beweglich ist, und wobei zumindest ein Teil des Robotermanipulators oder des daran befestigten Teils (5) eine erste Elektrode eines Messkondensators bildet und somit als Messsonde (5, 5') wirkt;
- Bereitstellen eines optischen, ersten Referenzobjekts (21) oder Markierung an einer ersten Position (x₁, y₁) an oder auf der Arbeitsfläche (2) oder dem Containerträger (11), wobei das erste Referenzobjekt (21) mittels Bildgebung erfassbar ist;
- Bereitstellung eines kapazitiven, zweiten Referenzobjekts (22, 25) an einer zweiten Position (x₂, y₂) an oder auf der Arbeitsfläche (2) oder Containerträger (11), wobei das zweite Referenzobjekt (22, 25) eine zweite Elektrode des Messkondensators bildet, und wobei eine Position (xₚ, yₚ) des Robotermanipulators oder des daran befestigten Teils (5) relativ zu der zweiten Position (x₂, y₂) mittels elektrischer Impedanzmessungen, insbesondere elektrischer Kapazitätsmessungen, ganz insbesondere absoluter Kapazitätsmessungen erfassbar ist;
- Plazieren eines Containers (3), wie einer Mikroplatte (8) oder eines mikrofluidischen Chips (10), oder eines Probenträgers (7), wie einer Petrischale oder eines Substrats, auf der Arbeitsfläche (2) oder dem Containerträger (11), wobei der Container (3) oder Probenträger (7) das Zielobjekt (8') aufweist;
**dadurch gekennzeichnet, dass** das Verfahren die folgenden Schritte umfasst
- Erfassen mindestens eines Bildes mit einer Abbildungsvorrichtung, wie einer Kamera (6), wobei das mindestens eine Bild das erste Referenzobjekt (21) und das Zielobjekt (8') umfasst, und wobei insbesondere die Abbildungsvorrichtung auf dem Robotermanipulator montiert ist;
- Erfassen einer abgebildeten ersten Position (x₁', y₁') des ersten Referenzobjekts (21) und einer abgebildeten Zielposition (xₜ', yₜ') des Zielobjekts (8') basierend auf dem mindestens einen Bild;
- Bestimmen einer Zielposition (xₜ, yₜ) basierend auf der ersten Position (x₁, y₁), der abgebildeten ersten Position (x₁', y₁') und der abgebildeten Zielposition (xₜ', yₜ'), insbesondere unter Berücksichtigung einer Abbildungsfunktion der Abbildungsvorrichtung, insbesondere optischer Eigenschaften von einer oder mehreren Linsen der Abbildungsvorrichtung, ganz insbesondere durch Entzerrung oder Entkrümmung der optischen Verzerrung der Abbildungsvorrichtung;
- Bewegen des Robotermanipulators oder des daran befestigten Teils (5), d.h. der Messsonde (5, 5'), zu verschiedenen Positionen des zweiten Referenzobjekts (22, 25) in einer Nähe der zweiten Position (x₂, y₂) und Durchführung einer elektrischen Impedanzmessung des Messkondensators, insbesondere einer elektrischen Kapazitätsmessung, ganz insbesondere einer absoluten Kapazitätsmessung, an den verschiedenen Positionen des zweiten Referenzobjekts (22, 25);
- Bestimmung einer aktuellen Position (xₚ, yₚ) des Robotermanipulators oder des daran befestigten Teils (5) basierend auf der Messungen der elektrischen Impedanz, insbesondere der Messungen der elektrischen Kapazität, ganz insbesondere der Messungen der absoluten Kapazität, die an den verschiedenen Positionen des zweiten Referenzobjekts (22, 25) vorgenommen werden;
- Bewegen des Robotermanipulators oder des daran befestigten Teils (5) von der aktuellen Position (xₚ, yₚ) zur Zielposition (xₜ, yₜ).

2. Verfahren nach Anspruch 1, wobei das an dem Robotermanipulator befestigte Teil (5) mindestens eines der folgenden ist:
- eine Pipette (5) mit einer Pipettenspitze (5'), insbesondere einer Wegwerfspitze, oder einer Düse, wobei insbesondere eine Öffnung der Pipettenspitze (5') oder Düse genau zu positionieren ist;
- einem Greifer (5), insbesondere mit einem Finger oder Stift (5'), wobei insbesondere ein Ende des Greifers (5), insbesondere des Fingers oder Stifts (5'), genau zu positionieren ist.

3. Verfahren nach Anspruch 1 oder 2, **dadurch gekennzeichnet, dass** das zweite Referenzobjekt (22, 25) mindestens eine Kante aufweist, an der während einer Bewegung der Messsonde (5, 5') die Impedanz, insbesondere die Kapazität, des Messkondensators sich ändert, und bei dem insbesondere eine Änderung der Leitfähigkeit oder der Dielektrizitätskonstante statt findet.

4. Verfahren nach einem der Ansprüche 1 bis 3, wobei das zweite Referenzobjekt (22, 25) mindestens einen Materialübergang umfasst, der, während Bewegung der Messsonde (5, 5') eine Änderung der Impedanz, insbesondere der Kapazität, des Messkondensators bewirkt, und an dem insbesondere eine Änderung einer Leitfähigkeit oder Dielektrizitätskonstante statt findet.

5. Verfahren nach einem der Ansprüche 1 bis 4, wobei das zweite Referenzobjekt (22, 25) mindestens eine Aussparung, Vertiefung, Ausschnitt oder Öffnung, wie ein Loch, Durchgangsloch, einen Schlitz oder eine Nut, aufweist, die während der Bewegung der Messsonde (5, 5') eine Änderung der Impedanz, insbesondere der Kapazität, des Messkondensators bewirkt.

6. Verfahren nach Anspruch 5, bei dem die Aussparung, die Vertiefung, der Ausschnitt oder Öffnung dreieckig oder trapezförmig ist, und wobei das zweite Referenzobjekt (22, 25) insbesondere zwei identische dreieckige oder trapezförmige Ausnehmungen, Vertiefungen, Ausschnitte oder Öffnungen aufweist, die in insbesondere um 180° in Bezug zueinander gedreht sind, und wobei die Messsonde (5, 5') bei den Messungen beide Aussparungen, Vertiefungen, Ausschnitte oder Öffnungen überfährt.

7. Verfahren nach Anspruch 5, wobei das zweite Referenzobjekt (22, 25) zwei sich kreuzende Schlitze umfasst, insbesondere zwei senkrechte Schlitze, die sich insbesondere in ihrem jeweiligen Mittelpunkt kreuzen.

8. Verfahren nach einem der Ansprüche 1 bis 6, wobei das erste Referenzobjekt (22, 25) eine ausgeprägte Form und/oder Struktur und/oder Farbe aufweist, wobei die ausgeprägte Form oder Struktur insbesondere einen Punkt aufweist, der sich an der ersten Position (x₁, y₁) befindet, und wobei sich die ausgeprägte Farbe insbesondere von der Arbeitsfläche (2) oder dem Containerträger (11) abhebt oder kontrastiert, insbesondere um eine Identifikation des ersten Referenzobjekts aus dem mindestens einen Bild mittels Farbfilterung zu ermöglichen.

9. Verfahren nach Anspruch 8, wobei das erste Referenzobjekt (22) Fadenkreuze und insbesondere einen Kreis umfasst, der auf einem Schnittpunkt des Fadenkreuzes zentriert ist, wobei der Schnittpunkt insbesondere auf der ersten Position (x₁, y₁) angeordnet ist.

10. Verfahren nach einem der Ansprüche 1 bis 8, wobei das erste (21) und das zweite (22, 25) Referenzobjekt zusammen angeordnet sind, wobei insbesondere die zweite Position (x₂, y₂) gleich der ersten Position (x₁, y₁) ist, insbesondere wobei die Fadenkreuze zwischen den Dreieckspaaren zentriert sind.

11. Verfahren nach Anspruch 10, wobei eine optisch sichtbare Form oder Struktur des zweiten Referenzobjekts (22, 25) als erstes Referenzobjekt (21) dient.

12. Verfahren nach einem der Ansprüche 1 bis 11, bei dem ein drittes und optional ein viertes Referenzobjekt (23, 24) oder Markierung an einer dritten Position (x₃, y₃) bzw. einer vierten Position (x₄, y₄) an oder auf der Arbeitsfläche (2) oder Containerträger (11) vorgesehen sind, wobei das dritte und vierte Referenzobjekt (23, 24) mittels Bildgebung detektierbar ist.

13. Verfahren nach Anspruch 12, wobei das erste und dritte und optional das vierte Referenzobjekt (21, 23, 24) oder Markierungen zur Berechnung eines Umrechnungsfaktors von Pixeln auf dem mindestens einen Bild in Millimeter auf der Arbeitsfläche (2) dienen, und insbesondere zur Berechnung eines Drehwinkels der Abbildungsvorrichtung (6) relativ zur x-Richtung, und insbesondere auch zur Entzerrung oder Entschärfung optischer Verzerrungen von der Abbildungsvorrichtung (6).

14. Verfahren nach einem der Ansprüche 1 bis 13, wobei die ersten, dritten und vierten Referenzobjekte (21, 23, 24) auf gleicher Höhe sind mit dem Zielobjekt, insbesondere ist eine vertikale z-Position der Referenzobjekte und des Zielobjekts dieselbe, insbesondere das erste, dritte und vierte Referenzobjekt und das Zielobjekt liegen in der Brennpunkt Ebene der Abbildungsvorrichtung.

15. Verfahren nach einem der Ansprüche 1 bis 14, wobei als Teil der Erfassung der abgebildeten ersten Position (x₁', y₁') des ersten Referenzobjekts eine Kreuzkorrelation, insbesondere eine normalisierte Kreuzkorrelation, unter Verwendung einer dem ersten Referenzobjekt entsprechenden Vorlage durchgeführt wird.

16. Verwendung des Verfahrens nach einem der Ansprüche 1 bis 15 für eines der folgenden:
- Laden von Mikrofluidik-Chips mit einer Pipettenspitze (5') oder einer Düse;
- Integration von Zielen wie biologischen Proben, z.B. Gewebeschnitten, mit nicht anlehrbaren Positionen in einer Proben- oder Liquid-Handling-Plattform für die Automatisierung integrierter Arbeitsabläufe;
- Positionierung einer Düse genau in einem interessierenden Bereich auf einem Gewebeschnitt oder einer Bakterienkultur, insbesondere für das sogenannte Colony Picking von Bakterienkulturen oder Nukleinsäureextraktion aus Gewebeschnitten;
- genaue Positionierung einer Düse beim 3D-Drucken einer Struktur durch Abgeben von 3D-Druckmaterial mit der Düse, z.B. zur Gewebeentnahme in einem Bereich von Interesse, insbesondere durch 3D-Druck, z.B. mit Paraffin, um eine Begrenzung um den Bereich von Interesse zu extrahieren;
- Positionierung eines Greifers (5) eines Robotermanipulators, insbesondere einen oder mehrere Finger (5') des Greifers (5), genau an einem Teil eines Laborgeräts, z.B. einem Probenbehälter (3), so dass der Greifer (5) das Teil des Laborgeräts genau ergreifen kann.

17. Eine automatisierte Probenhandhabungsvorrichtung, die in der Lage ist, einen Robotermanipulator oder ein daran befestigtes Teil (5) an einer Zielposition (xₜ, yₜ) eines Zielobjekts genau zu positionieren, die Vorrichtung umfassend:
- eine Arbeitsfläche (2), z.B. einen Arbeitstisch, zur Plazierung von mindestens einem Container (3), wie z.B. einer Mikroplatte oder eines mikrofluidischen Chips, oder Probenträgers, wie z.B. einer Petrischale oder eines Substrats, der angepasst ist, um eine oder mehrere Proben zu enthalten, tragen oder aufzunehmen, und/oder mindestens eines Containerträgers (11), wobei sich die Arbeitsfläche (2) in einer horizontalen x- und einer horizontalen y-Richtung erstreckt, und wobei der Container (3) oder die Probe das Zielobjekt (8') aufweist;
- einen Robotermanipulator, wie z.B. einen Probenhandhabungsarm (4), an dem insbesondere das Teil (5) befestigt ist, wobei der Robotermanipulator in der x-Richtung, der y-Richtung und einer vertikalen z-Richtung beweglich ist, und wobei mindestens ein Teil des Robotermanipulators oder des daran befestigten Teils (5), eine erste Elektrode eines Messkondensators bildet und somit als Messsonde (5, 5') dienen kann;
- ein optisches, erstes Referenzobjekt (21) oder eine Markierung an einer ersten Position (x₁, y₁) an oder auf der Arbeitsfläche (2) oder dem Containerträger (11), wobei das erste Referenzobjekt (21) mittels Bildgebung erfassbar ist;
- ein kapazitives, zweites Referenzobjekt (22, 25) an einer zweiten Position (x₂, y₂) an oder auf der Arbeitsfläche (2) oder dem Behälterträger (11), wobei das zweite Referenzobjekt (22, 25) eine zweite Elektrode des Messkondensators bildet, und wobei eine Position des Robotermanipulators oder des daran befestigten Teils (5) relativ zu der zweiten Position (x₂, y₂) mittels elektrischer Impedanzmessungen erfassbar ist, insbesondere elektrischer Kapazitätsmessungen, ganz insbesondere absoluten Kapazitätsmessungen;
- eine Abbildungsvorrichtung, wie z.B. eine Kamera (6), die geeignet ist, mindestens ein Bild zu erfassen, das das erste Referenzobjekt (21) und das Zielobjekt (8') umfasst, und somit eine abgebildete erste Position (x₁', y₁') und eine abgebildete Zielposition (xₜ', yₜ') zu erfassen, wobei die Abbildungsvorrichtung insbesondere an dem Robotermanipulator angebracht ist;
- eine Messeinheit (13), an der die Messsonde (5, 5') und das zweite Referenzobjekt (22, 25) im Betrieb angebracht sind, angepasst zur Messung einer Impedanz, insbesondere einer Kapazität, insbesondere einer absoluten Kapazität des Messkondensators;
- eine Steuereinheit (14), die dazu geeignet ist, um:
- eine Zielposition (xₜ, yₜ) auf der Grundlage der ersten Position (x₁, y₁), der abgebildeten ersten Position (x₁', y₁') und der abgebildeten Zielposition (xₜ', yₜ'), insbesondere unter Berücksichtigung einer Abbildungsfunktion der bildgebenden Vorrichtung, insbesondere der optischen Eigenschaften eines oder mehrerer Linsen der bildgebenden Vorrichtung, insbesondere durch Entzerrung oder Entkrümmung der optischen Verzerrung der bildgebenden Vorrichtung zu bestimmen;
- den Robotermanipulator so zu betätigen, dass die Messsonde (5, 5') an verschiedene Positionen des zweiten Referenzobjekts (22, 25) in Nähe der zweiten Position (x₂, y₂) bewegt wird;
- Auslösen der Messeinheit (13) zur Durchführung von elektrischen Impedanzmessungen, insbesondere von elektrischen Kapazitätsmessungen, insbesondere absoluten Kapazitätsmessungen, an den verschiedenen Positionen des zweiten Referenzobjekts (22, 25);
- Bestimmung einer aktuellen Position (xₒ, yₒ) der Messsonde (5, 5') basierend auf elektrischen Impedanzmessungen, insbesondere Messungen der elektrischen Kapazität, vor allem Messungen der absoluten Kapazität, die an den verschiedenen Stellen des zweiten Referenzobjekts (22, 25) vorgenommen werden;
- den Robotermanipulator oder das daran befestigte Teil (5) von der aktuellen Position (xₒ, yₒ) zur Zielposition (xt, yₜ) zu bewegen.

## Revendications

1. Procédé de positionnement précis d'un robot manipulateur ou d'une pièce (5) fixée à celui-ci dans une position cible (xt, yt) d'un objet cible (8') dans un dispositif automatisé de manipulation d'échantillons (1), le procédé comprenant les étapes consistant à :
- fournir une surface de travail (2), par exemple une table de travail, permettant le placement d'au moins un récipient (3) et/ou un porte-récipient (11), la surface de travail (2) s'étendant dans une direction horizontale x et une direction horizontale y ;
- fournir un robot manipulateur, tel qu'un bras de manipulation d'échantillons (4), en particulier auquel est fixée la pièce (5), le robot manipulateur étant mobile dans la direction x, dans la direction y et dans une direction z verticale, et au moins une partie du robot manipulateur ou de la pièce (5) qui y est fixée formant une première électrode d'un condensateur de mesure et agissant par conséquent comme une sonde de mesure (5, 5') ;
- fournir un premier objet de référence optique (21) ou un repère au niveau d'une première position (x₁, y₁) au niveau de ou sur la surface de travail (2) ou le porte-récipient (11), le premier objet de référence (21) étant détectable par imagerie ;
- fournir un deuxième objet de référence capacitif (22, 25) au niveau d'une deuxième position (x₂, y₂) au niveau de ou sur la surface de travail (2) ou du porte-récipient (11), le deuxième objet de référence (22, 25) formant une seconde électrode du condensateur de mesure, et une position (xₚ, yₚ) du robot manipulateur ou de la pièce (5) fixée à celui-ci par rapport à la deuxième position (x₂, y₂) étant détectable au moyen de mesures d'impédance électrique, en particulier de mesures de capacité électrique, plus particulièrement de mesures de capacité absolue ;
- placer un récipient (3), tel qu'une plaque de microtitration (8) ou une puce microfluidique (10), ou un porte-échantillon (7), tel qu'une boîte de Petri ou un substrat, sur la surface de travail (2) ou le porte-récipient (11), le récipient (3) ou le porte-échantillon (7) comportant l'objet cible (8') ; **caractérisé en ce que** le procédé comprend les étapes consistant à :
- capturer au moins une image avec un capteur d'images, tel qu'une caméra (6), les images, au moins au nombre de une, comprenant le premier objet de référence (21) et l'objet cible (8'), et le capteur d'images en particulier étant monté sur le robot manipulateur ;
- détecter une première position imagée (x₁', y₁') du premier objet de référence (21) et une position cible imagée (xt', yt') de l'objet cible (8') sur la base des images, au moins au nombre de une ;
- déterminer une position cible (xt, yt) sur la base de la première position (x₁, y₁), de la première position imagée (x₁', y₁') et de la position cible imagée (xₜ', yt'), en particulier en tenant compte d'une fonction d'imagerie du capteur d'images, en particulier des propriétés optiques d'un ou de plusieurs objectifs du capteur d'images, plus particulièrement en rectifiant ou en corrigeant la distorsion optique du capteur d'images ;
- déplacer le robot manipulateur ou la pièce (5) qui y est fixée, c'est-à-dire la sonde de mesure (5, 5'), vers différents emplacements du deuxième objet de référence (22, 25) à proximité de la deuxième position (x₂, y₂) et effectuer une mesure d'impédance électrique du condensateur de mesure, en particulier une mesure de capacité électrique, plus particulièrement une mesure de capacité absolue, au niveau des différents emplacements du deuxième objet de référence (22, 25) ;
- déterminer une position actuelle (xₚ, yₚ) du robot manipulateur ou de la pièce (5) qui y est fixée sur la base des mesures d'impédance électrique, en particulier des mesures de capacité électrique, plus particulièrement des mesures de capacité absolue prises aux différents emplacements du deuxième objet de référence (22, 25) ;
- déplacer le robot manipulateur ou la pièce (5) qui y est attachée de la position actuelle (xₚ, yₚ) vers la position cible (xt, yt).

2. Procédé de la revendication 1, dans lequel la pièce (5) fixée au robot manipulateur est au moins une pièce parmi :
- une pipette (5), présentant un embout de pipette (5'), en particulier un embout jetable, ou un ajutage de pipette, une ouverture de l'embout de pipette (5') ou de l'ajutage devant en particulier être positionnée avec précision ;
- un organe de préhension (5), en particulier comportant un doigt ou une tige (5'), en particulier une extrémité de l'organe de préhension (5), plus particulièrement du doigt ou de la tige (5'), devant être positionnée avec précision.

3. Procédé de la revendication 1 ou 2, dans lequel le deuxième objet de référence (22, 25) présente au moins un bord au niveau duquel, lors d'un déplacement de la sonde de mesure (5, 5'), l'impédance, en particulier la capacité, du condensateur de mesure change, et au niveau duquel se produit en particulier un changement d'une conductivité ou d'une constante diélectrique.

4. Procédé de l'une quelconque des revendications 1 à 3, dans lequel le deuxième objet de référence (22, 25) comprend au moins une transition de matériau qui, lors d'un déplacement de la sonde de mesure (5, 5'), provoque une modification de l'impédance, en particulier de la capacité, du condensateur de mesure, et au niveau de laquelle se produit en particulier une modification d'une conductivité ou d'une constante diélectrique.

5. Procédé de l'une quelconque des revendications 1 à 4, dans lequel le deuxième objet de référence (22, 25) présente au moins un évidement, une découpe en creux ou une ouverture, tel qu'un orifice, un trou traversant, une fente ou une rainure, qui, lors du déplacement de la sonde de mesure (5, 5'), provoque une modification de l'impédance, en particulier de la capacité, du condensateur de mesure.

6. Procédé de la revendication 5, dans lequel l'évidement, la dépression, la découpe ou l'ouverture est triangulaire ou trapézoïdal, et dans lequel le deuxième objet de référence (22, 25) présente en particulier deux évidements, dépressions, découpes ou ouvertures triangulaires ou trapézoïdaux identiques, qui sont disposés en particulier tournés de 180° l'un par rapport à l'autre, et dans lequel la sonde de mesure (5, 5') traverse les deux évidements, dépressions, découpes ou ouvertures pendant les mesures.

7. Procédé de la revendication 5, dans lequel le deuxième objet de référence (22, 25) comprend deux fentes qui se coupent, en particulier deux fentes perpendiculaires, en particulier qui se coupent en leur point médian respectif.

8. Procédé de l'une quelconque des revendications 1 à 6, dans lequel le premier objet de référence (22, 25) présente une forme et/ou une structure et/ou une couleur distinctes, la forme ou la structure distincte présentant en particulier un point situé au niveau de la première position (x₁, y₁), et dans lequel la couleur distincte se détache en particulier de la surface de travail (2) ou du support de récipient (11) ou contrastant avec ceux-ci, permettant en particulier l'identification du premier objet de référence à partir des images, au moins au nombre de une, au moyen d'un filtrage de couleur.

9. Procédé de la revendication 8, dans lequel le premier objet de référence (22) comprend un réticule et en particulier un cercle centré au niveau d'une intersection du réticule, l'intersection étant en particulier située au niveau de la première position (x₁, y₁).

10. Procédé de l'une quelconque des revendications 1 à 8, dans lequel les premier (21) et deuxième (22, 25) objets de référence sont colocalisés, en particulier dans lequel la deuxième position (x₂, y₂) est la même que la première position (x₁, y₁), plus particulièrement dans lequel les réticules sont centrés entre les paires de triangles.

11. Procédé de la revendication 10, dans lequel une forme ou une structure optiquement visible du deuxième objet de référence (22, 25) agit comme premier objet de référence (21).

12. Procédé de l'une quelconque des revendications 1 à 11, dans lequel un troisième et en option un quatrième objet de référence (23, 24) ou repère au niveau d'une troisième position (x₃, y₃) et d'une quatrième position (x₄, y₄), respectivement, sont prévus au niveau de ou sur la surface de travail (2) ou du support de récipient (11), le troisième et le quatrième objets de référence (23, 24) étant détectables par une imagerie.

13. Procédé de la revendication 12, dans lequel les premier et troisième et en option quatrième objets de référence (21, 23, 24) ou repères sont utilisés pour calculer un facteur de conversion de pixels sur les images, au moins au nombre de une, en millimètres, sur la surface de travail (2), et en particulier pour calculer un angle de rotation du capteur d'images (6) par rapport à la direction x, et en particulier également pour rectifier ou corriger la distorsion optique du capteur d'images (6).

14. Procédé de l'une quelconque des revendications 1 à 13, dans lequel les premier, troisième et quatrième objets de référence (21, 23, 24) sont alignés avec l'objet cible, en particulier une position z verticale des objets de référence et de l'objet cible est identique, en particulier les premier, troisième et quatrième objets de référence et l'objet cible se trouvent dans le plan focal du capteur d'images.

15. Procédé de l'une quelconque des revendications 1 à 14, dans lequel, dans le cadre de la détection de la première position imagée (x₁', y₁') du premier objet de référence, une corrélation croisée, en particulier une corrélation croisée normalisée, est effectuée à l'aide d'un gabarit correspondant au premier objet de référence.

16. Utilisation du procédé selon l'une quelconque des revendications 1 à 15 pour une action parmi les suivantes :
- chargement de puces microfluidiques à l'aide d'un embout de pipette (5') ou d'un ajutage ;
- intégration de cibles telles que des échantillons biologiques, par exemple des coupes de tissus, avec des positions non programmables par apprentissage, dans une plate-forme de manipulation d'échantillons ou de liquides afin d'automatiser des flux de travail intégrés ;
- positionnement précis d'un ajutage dans une zone d'intérêt sur une coupe biologique ou une culture bactérienne, en particulier pour ce que l'on appelle le prélèvement de colonies de cultures bactériennes ou l'extraction d'acides nucléiques depuis des coupes biologiques ;
- positionnement précis d'un ajutage lors de l'impression 3D d'une structure en distribuant un matériau d'impression 3D avec l'ajutage, par exemple pour l'extraction de tissu dans une zone d'intérêt, en particulier par impression 3D, par exemple avec de la paraffine, d'une limite autour de la zone d'intérêt à extraire ;
- positionnement d'un organe de préhension (5) d'un robot manipulateur, en particulier d'un ou de plusieurs doigts (5') du dispositif de préhension (5), précisément au niveau d'un élément de matériel de laboratoire, par exemple un récipient d'échantillons (3), de sorte que l'organe de préhension (5) peut saisir avec précision l'élément de matériel de laboratoire.

17. Dispositif automatisé de manipulation d'échantillons capable de positionner avec précision un robot manipulateur ou une pièce (5) fixée à celui-ci au niveau d'une position cible (xt, yt) d'un objet cible, le dispositif comprenant :
- une surface de travail (2), par exemple une table de travail, pour le placement d'au moins un récipient (3), tel qu'une plaque de microtitration ou une puce microfluidique, ou un porte-échantillon, tel qu'une boîte de Petri ou un substrat, adapté pour contenir, porter ou recevoir un ou plusieurs échantillons, et/ou d'au moins un porte-récipient (11), la surface de travail (2) s'étendant dans une direction horizontale x et une direction horizontale y, et le récipient (3) ou l'échantillon présentant l'objet cible (8') ;
- un robot manipulateur, tel qu'un bras de manipulation d'échantillons (4), en particulier auquel est fixée la pièce (5), le robot manipulateur étant mobile dans la direction x, dans la direction y et dans une direction z verticale, et au moins une partie du robot manipulateur ou de la pièce (5) qui y est fixée formant une première électrode d'un condensateur de mesure et étant ainsi adaptée pour agir comme une sonde de mesure (5, 5') ;
- un premier objet de référence optique (21) ou repère au niveau d'une première position (x₁, y₁) au niveau de ou sur la surface de travail (2) ou du porte-récipient (11), le premier objet de référence (21) étant détectable par imagerie ;
- un second objet de référence capacitif (22, 25) au niveau d'une deuxième position (x₂, y₂) au niveau de ou sur la surface de travail (2) ou du porte-récipient (11), le deuxième objet de référence (22, 25) formant une seconde électrode du condensateur de mesure, et une position du robot manipulateur ou de la pièce (5) fixée à celui-ci par rapport à la deuxième position (x₂, y₂) étant détectable au moyen de mesures d'impédance électrique, en particulier de mesures de capacité électrique, plus particulièrement de mesures de capacité absolue ;
- un capteur d'images, tel qu'une caméra (6), adapté pour capturer au moins une image comprenant le premier objet de référence (21) et l'objet cible (8') et ainsi acquérir une première position imagée (x₁', y₁') et une position cible imagée (xₜ', yₜ'), le capteur d'images étant en particulier monté sur le robot manipulateur ;
- une unité de mesure (13), à laquelle la sonde de mesure (5, 5') et le deuxième objet de référence (22, 25) sont connectés de manière opérationnelle, adaptés pour mesurer une impédance, en particulier une capacité, plus particulièrement une capacité absolue du condensateur de mesure ;
- une unité de commande (14) adaptée pour :
- déterminer une position cible (xₜ, yt) sur la base de la première position (x₁, y₁), de la première position imagée (x₁', y₁') et de la position cible imagée (xₜ', yₜ'), en particulier en tenant compte d'une fonction d'imagerie du capteur d'images, en particulier des propriétés optiques d'un ou de plusieurs objectifs du capteur d'images, plus particulièrement en rectifiant ou en corrigeant la distorsion optique du capteur d'images ;
- actionner le robot manipulateur de façon telle que la sonde de mesure (5, 5') est déplacée vers différents emplacements du deuxième objet de référence (22, 25) à proximité de la deuxième position (x₂, y₂) ;
- déclencher l'unité de mesure (13) pour effectuer des mesures d'impédance électrique, en particulier des mesures de capacité électrique, plus particulièrement des mesures de capacité absolue, aux différents emplacements du deuxième objet de référence (22, 25) ;
- déterminer une position actuelle (xₒ, yₒ) de la sonde de mesure (5, 5') sur la base des mesures d'impédance électrique, en particulier des mesures de capacité électrique, plus particulièrement des mesures de capacité absolue prises aux différents emplacements du deuxième objet de référence (22, 25) ;
- déplacer le robot manipulateur ou la pièce (5) qui y est attachée de la position actuelle (xₒ, yₒ) vers la position cible (xt, yt).
